# EUROPEAN PATENT SPECIFICATION

(11) **EP 3 359 613 B1**
(45) Date of publication and mention of the grant of the patent: **06.03.2019**
(21) Application number: 16784411.7
(22) Date of filing: 04.10.2016
(51) Int. Cl.: C09D 107/00, B60C 1/00, C08K 3/04, C09D 121/00, C08L 7/00, C08L 21/00

(54) **TIRE HAVING IMPROVED RESISTANCE TO THERMAL DEGRADATION**
REIFEN MIT VERBESSERTER WIDERSTANDSFÄHIGKEIT GEGENÜBER THERMISCHEM ABBAU
PNEU PRÉSENTANT UNE RÉSISTANCE AMÉLIORÉE À LA DÉGRADATION THERMIQUE

(30) Priority: 07.10.2015 IT UB20154204
(43) Date of publication of application: 15.08.2018
(73) Proprietor: Bridgestone Corporation, Tokyo 104-8340 (JP)
(72) Inventor: RICCIO, Valeria, 00128 Roma (IT); MADAU, Francesco, 00128 Roma (IT)
(74) Representative: Marchetti, Alessio
(86) International application number: PCT/EP2016/073594
(87) International publication number: WO 2017/060206

(56) References cited:
- EP-A1- 0 705 722
- EP-A1- 1 557 294
- EP-A1- 1 767 570
- EP-A1- 2 071 002
- EP-A1- 2 191 982
- EP-A2- 0 718 126
- US-A- 5 872 178
- US-A1- 2003 068 487
- US-B1- 6 591 879

## Description

The present invention relates to a tire having improved resistance to thermal degradation.

As is known to a person skilled in the art, tires in use are necessarily exposed to high temperatures, particularly with regard to the tread portion and the sidewalls.

It is also known that when the rubber is exposed to elevated temperatures it is subjected to degradation phenomena that consequently affect the life of the tire itself.

Also, when a portion of the tire is exposed to high temperature, it presents less stiffness and, therefore, less resistance to the propagation of cracks.

Possible solutions for overcoming this problem have involved the use of compounds that have a high thermal conductivity and that are capable, therefore, of avoiding the formation of local temperature increases. The high thermal conductivity of the compounds has been obtained either by intervening in the nature of the polymeric base and/or by using special types of fillers. As is immediately clear to a person skilled in the art, these solutions, in addition to being particularly complicated and expensive, can also interfere with other characteristics of the compound.

It was, therefore, felt that there was a need for a solution that would not involve a modification to the compounds and that, at the same time, would guarantee the high surface conductivity of the tire and the consequent absence of local temperature increases.

The present invention relates to a paint having high thermal conductivity to be applied to the outer surface of a tire, said paint being characterized in that it consists of a rubber compound having a thermal conductivity greater than or equal to 0.2 Wm⁻¹K⁻¹, a viscosity of between 0.5 and 10000 cP and an elasticity modulus less than or equal to 8 MPa.

Preferably, said rubber compound comprises a cross-linkable unsaturated chain polymer.

Preferably, said rubber compound is water-based.

Preferably, said water-based compound comprises a filler and an adhesive resin.

Preferably, said filler is carbon black.

Preferably, the water-based compound comprises from 5 to 80 phr of carbon black.

The present invention also relates to a tire comprising a layer having high thermal conductivity, said tire being characterized in that said layer having high thermal conductivity is made using the paint of the present invention, applied to at least part of the outer surface of the tire itself.

Preferably, said paint is applied to the grooves of the tread portion and to the sidewalls of the tire.

Preferably, the layer having high thermal conductivity has a thickness of between 10 and 100 µm.

The following are examples of non-limiting embodiments given purely by way of illustration.

A water-based compound was prepared, the composition of which is recorded in phr in Table I together with its properties in terms of thermal conductivity, viscosity, and elastic modulus.

**TABLE I**

| | |
|---|---|
| Natural rubber | 100 |
| Carbon black | 50 |
| Adhesive resin | 20 |
| Sodium oleate | 6.5 |
| % of total solids | 35 |
| Viscosity (cP) | 1000 |
| Thermal conductivity (W/mK) | 1.4 |
| Elastic modulus (Mpa) | 5 |

The carbon black is the N330 type.

The adhesive resin is a mixture of Icatack 650® and Icatack 1050® resins marketed by the company ICAP-SIRA.

The viscosity was measured according to the DIN EN IS03219 standard.

The thermal conductivity was measured according to the ASTM C177 standard.

The elastic modulus was measured according to the ASTM D882 standard.

While the thermal conductivity values recorded as an essential feature of the present invention are necessary in order to achieve a reduction in temperature compared to the known art, the characteristics relating to the viscosity and elasticity are needed in order to ensure, respectively, the correct and effective application of the compound and its constant adhesion to the surface of the tire, which necessarily deforms during use.

The water-based compound referred to above was tested on the outer surface of a tire in order to verify its effects on the heating of a tire in use. In particular, the water-based compound was applied to some portions of the tread of a tire and, after said tire was exposed to operating conditions, the temperatures therein were measured. For comparison, the temperatures were also measured of other portions of the same tire arranged in a position symmetrical to the portions to which the water-based compound was applied.

The choice of two symmetrical portions of the same tire in use guarantees that said tire portions are exposed to the same conditions, with the result that the comparison of their temperatures is extremely significant.

Specifically, the water-based compound was applied (using a brush or by the spraying technique) to an internal groove and to an external groove of the tread in order to also verify the effectiveness of the water-based compound on different parts of the tread. Thereafter, the tire was exposed to the operating conditions specified by the ISO28580-2009 standard and the temperature was measured using an infrared camera of the cooled sensor type (FLIR; Model SC3000).

In this way, the temperatures recorded at the grooves where the water-based compound of the invention was applied and at the respective symmetrical grooves were measured and then compared. During the test the temperature measurements were recorded at time intervals of 10 minutes, 20 minutes, 40 minutes and 60 minutes.

Table II shows the values relating to the temperature differences measured respectively for the internal groove and for the external groove. The temperature differences in Table II were calculated by subtracting the temperature valuesmeasured at those portions having the paint of the present invention from the temperature values measured at the respective symmetrical portions.

**TABLE II**

| | 10 min. | 20 min. | 40 min. | 60 min. |
|---|---|---|---|---|
| Δt (°C) external groove | 2.7 | 4.2 | 4.1 | 4.0 |
| Δt (°C) internal groove | 3.5 | 3.6 | 3.2 | 3.5 |

From the values of Table II it is clear that the water-based compound of the present invention, when applied to the outer surface of a tire, is capable of guaranteeing, in the area where it was applied, lower temperatures compared to the situation in which it is absent.

It should also be pointed out that the water-based compound of the present invention has the great advantage that it can be applied at any point in time during the life of the tire itself.

Furthermore, another advantage of the present invention relates to the simplicity of applying the paint (using a brush or by the spraying technique).

Lastly, it was determined that if the tire is found to be in a high humidity environment (for example, in the presence of water or snow) the effects due to the presence of the paint of the present invention are even greater.

## Claims

1. A paint having high thermal conductivity to be applied to the outer surface of a tire, said paint being **characterized in that** it consists of a rubber compound having a thermal conductivity measured according to the ASTM C177 standard greater than or equal to 0.2 Wm⁻¹K⁻¹, a viscosity measured according to the DIN EN IS03219 standard of between 0.5 and 10000 cP and an elasticity modulus measured according to the ASTM D882 standard less than or equal to 8 MPa.

2. The paint according to claim 1, **characterized in that** said rubber compound comprises a cross-linkable unsaturated chain polymer.

3. The paint according to claim 1 or 2, **characterized in that** said rubber compound is water-based.

4. The paint according to claim 3, **characterized in that** said water-based compound comprises a filler and an adhesive resin.

5. The paint according to claim 4, **characterized in that** said filler is carbon black.

6. The paint according to claim 5, **characterized in that** the carbon black is present in an amount of between 5 and 80 phr.

7. A tire comprising a layer having high thermal conductivity, said tire being **characterized in that** said layer having high thermal conductivity is made of a paint according to one of the preceding claims, applied to at least part of the outer surface of the tire itself.

8. The tire according to claim 7, **characterized in that** said paint is applied to the grooves of the tread portion and to the sidewalls of the tire.

9. The tire according to claim 7 or 8, **characterized in that** the layer having high thermal conductivity has a thickness of between 10 and 100 µm.

## Patentansprüche

1. Farbe mit hoher Wärmeleitfähigkeit, die auf die äußere Oberfläche eines Reifens aufgebracht wird, wobei die Farbe **dadurch gekennzeichnet ist, dass** sie aus einer Gummimischung mit einer gemäß dem Standard ASTM C177 gemessenen Wärmeleitfähigkeit größer oder gleich 0,2 Wm⁻¹K⁻¹, einer gemäß dem Standard DIN EN IS03219 gemessenen Viskosität zwischen 0,5 und 10.000 cP und einem gemäß dem Standard ASTM D882 gemessenen Elastizitätsmodul kleiner oder gleich 8 MPa besteht.

2. Farbe nach Anspruch 1, **dadurch gekennzeichnet, dass** die Gummimischung ein vernetzbares, ungesättigtes Kettenpolymer umfasst.

3. Farbe nach Anspruch 1 oder 2, **dadurch gekennzeichnet, dass** die Gummimischung auf Wasser basiert.

4. Farbe nach Anspruch 3, **dadurch gekennzeichnet, dass** die auf Wasser basierende Mischung einen Füllstoff und ein Klebharz umfasst.

5. Farbe nach Anspruch 4, **dadurch gekennzeichnet, dass** der Füllstoff Ruß ist.

6. Farbe nach Anspruch 5, **dadurch gekennzeichnet, dass** der Ruß in einer Menge zwischen 5 und 80 phr vorliegt.

7. Reifen, der eine Schicht mit hoher Wärmeleitfähigkeit umfasst, wobei der Reifen **dadurch gekennzeichnet ist, dass** die Schicht mit hoher Wärmeleitfähigkeit aus einer Farbe nach einem der vorstehenden Ansprüche hergestellt ist, die auf mindestens einem Teil der Außenfläche des Reifens selbst aufgebracht ist.

8. Reifen nach Anspruch 7, **dadurch gekennzeichnet, dass** die Farbe auf die Rillen des Laufflächenabschnitts und auf die Seitenwände des Reifens aufgebracht ist.

9. Reifen nach Anspruch 7 oder 8, **dadurch gekennzeichnet, dass** die Schicht mit hoher Wärmeleitfähigkeit eine Dicke zwischen 10 und 100 µm aufweist.

## Revendications

1. Peinture ayant une conductivité thermique élevée à appliquer à la surface externe d'un pneumatique, ladite peinture étant **caractérisée en ce qu'**elle est constituée d'un composé de caoutchouc ayant une conductivité thermique mesurée selon la norme ASTM C177 supérieure ou égale à 0,2 Wm⁻¹K⁻¹, une viscosité mesurée selon la norme DIN EN IS03219 comprise entre 0,5 et 10 000 cP et un module d'élasticité mesuré selon la norme ASTM D882 inférieur ou égal à 8 MPa.

2. Peinture selon la revendication 1, **caractérisée en ce que** ledit composé de caoutchouc comprend un polymère à chaîne insaturée réticulable.

3. Peinture selon la revendication 1 ou 2, **caractérisée en ce que** ledit composé de caoutchouc est à base d'eau.

4. Peinture selon la revendication 3, **caractérisée en ce que** ledit composé à base d'eau comprend une charge et une résine adhésive.

5. Peinture selon la revendication 4, **caractérisée en ce que** ladite charge est du noir de carbone.

6. Peinture selon la revendication 5, **caractérisée en ce que** le noir de carbone est présent en une quantité comprise entre 5 et 80 pcc.

7. Pneumatique comprenant une couche ayant une conductivité thermique élevée, ledit pneumatique étant **caractérisé en ce que** ladite couche ayant une conductivité thermique élevée est constituée d'une peinture selon l'une des revendications précédentes, appliquée à au moins une partie de la surface externe du pneumatique lui-même.

8. Pneumatique selon la revendication 7, **caractérisé en ce que** ladite peinture est appliquée aux rainures de la partie de bande de roulement et aux parois latérales du pneumatique.

9. Pneumatique selon la revendication 7 ou 8, **caractérisé en ce que** la couche ayant une conductivité thermique élevée a une épaisseur comprise entre 10 et 100 µm.
